# EUROPEAN PATENT APPLICATION

(11) **EP 4 636 226 A1**
(43) Date of publication of application: **22.10.2025**
(21) Application number: 25170828.5
(22) Date of filing: 15.04.2025
(51) Int. Cl.: F01D 15/10, F01D 25/12, F01D 25/16, F01D 9/06, F02C 7/12, F28D 21/00

(54) **POWERPLANT WITH SPIRALED HEAT EXCHANGE PASSAGE**

(30) Priority: 19.04.2024 US 202418640951
(71) Applicant: RTX Corporation, Farmington, CT 06032 (US)
(72) Inventor: BINEK, Lawrence A., Glastonbury, 06033 (US); BUGIN, Yoel, Port St Lucie, 34983 (US)
(74) Representative: Dehns

(57) **Abstract**

An assembly is provided for a powerplant (20). This powerplant assembly includes an electric machine (24), a stationary structure (70) and a fuel source (96). The electric machine (24) includes an electric machine rotor (82). The electric machine rotor (82) is configured to rotate about an axis (26). The stationary structure (70) supports the electric machine (24) and includes a heat exchange passage (92). The heat exchange passage (92) spirals around the electric machine (24) as the heat exchange passage (92) extends within the stationary structure (70) and axially along the electric machine (24). The fuel source (96) is fluidly coupled to the heat exchange passage (92).

## Description

### BACKGROUND OF THE DISCLOSURE

### 1. Technical Field

This disclosure relates generally to a powerplant such as a turbine engine and, more particularly, to heat transfer within the powerplant.

### 2. Background Information

A modern gas turbine engine includes various internal components that are subject to relatively high temperatures. To prevent material fatigue and deterioration, it is known in the art to bleed compressed air from a compressor section of the turbine engine and route that bleed air to select internal components for cooling. Bleeding compressed air from the compressor section, however, decreases efficiency of the turbine engine. In addition, as turbine engines are made more and more compact, it may be increasingly more difficult to include internal passages for routing the bleed air from the compressor section to the air cooled components. There is a need in the art therefore for alternative techniques for cooling internal components / structures of a turbine engine.

### SUMMARY OF THE DISCLOSURE

According to an aspect of the present disclosure, an assembly is provided for a powerplant. This powerplant assembly includes an electric machine, a stationary structure and a fuel source. The electric machine includes an electric machine rotor. The electric machine rotor is configured to rotate about an axis. The stationary structure supports the electric machine and includes a heat exchange passage. The heat exchange passage spirals around the electric machine as the heat exchange passage extends within the stationary structure and axially along the electric machine. The fuel source is fluidly coupled to the heat exchange passage.

According to another aspect of the present disclosure, which the Applicant expressly reserves the right to claim independently, another assembly is provided for a powerplant. This powerplant assembly includes a rotating assembly, a stationary structure, a bearing and a fuel source. The rotating assembly is configured to rotate about an axis. The stationary structure axially overlaps and circumscribes the rotating assembly. The bearing mounts the rotating assembly to the stationary structure. The stationary structure includes a heat exchange passage. The heat exchange passage spirals around the bearing as the heat exchange passage extends within the stationary structure and axially along the bearing. The fuel source is fluidly coupled to the heat exchange passage.

According to still another aspect of the present disclosure, which the Applicant expressly reserves the right to claim independently, another assembly is provided for a powerplant. This powerplant assembly includes an inlet structure configured to form an inlet into a flowpath of the powerplant. The inlet structure includes an inner platform structure, an outer platform structure, a plurality of inlet vanes and a heat exchange passage. The inner platform structure forms a radial inner peripheral boundary of the flowpath through the inlet structure. The outer platform structure forms a radial outer peripheral boundary of the flowpath through the inlet structure. The inlet vanes are arranged circumferentially about an axis. Each of the inlet vanes projects radially across the flowpath from the inner platform structure to the outer platform structure. The heat exchange passage spirals around the axis as the heat exchange passage extends within the inner platform structure and axially along the axis.

The powerplant assembly may also include an electric machine housed within an internal cavity of the inlet structure. The heat exchange passage may spiral around the electric machine. The inner platform structure may be configured to transfer heat energy from the electric machine into a fluid flowing through the heat exchange passage.

The powerplant assembly may also include a shaft and a bearing. The shaft may be configured to rotate about the axis. The bearing may mount the shaft to the inner platform structure. The heat exchange passage may spiral around the bearing. The inner platform structure may be configured to transfer heat energy from the bearing into a fluid flowing through the heat exchange passage.

The powerplant assembly may also include a fuel source fluidly coupled to the heat exchange passage.

The bearing may be configured to receive fuel, from the fuel source through the heat exchange passage, for lubrication of the bearing.

The stationary structure may be configured to transfer heat energy from the electric machine into fuel flowing within the heat exchange passage that is received from the fuel source.

The electric machine may also include an electric machine stator mounted to the stationary structure. The electric machine stator may be radially next to the electric machine rotor. The electric machine stator may axially overlap and circumscribe the electric machine rotor.

The heat exchange passage may have a uniform radius from the axis as the heat exchange passage spirals around the electric machine.

The heat exchange passage may have a uniform pitch as the heat exchange passage spirals around the electric machine.

The heat exchange passage may include a first section and a second section fluidly coupled to the first section. The first section may spiral around the electric machine. The second section may extend along a straight line trajectory.

The first section may be upstream of the second section.

The first section may be downstream of the second section.

The heat exchange passage may also include a third section fluidly coupled to the first section through the second section. The third section may spiral around the axis as the heat exchange passage extends within the stationary structure and axially along the axis.

The heat exchange passage may include a first section, a second section and a third section fluidly coupled to the first section through the second section. The first section may spiral around the electric machine. The second section may be disposed to a side of the axis. The second section may spiral around the axis as the heat exchange passage extends within the stationary structure and axially along the axis.

The second section may extend along a straight trajectory from the first section to the third section.

The powerplant assembly may also include a shaft and a bearing. The shaft may be configured to rotate about the axis. The bearing may mount the shaft to the stationary structure. The electric machine rotor may be attached to and rotatable with the shaft. The heat exchange passage may spiral around the bearing as the heat exchange passage extends within the stationary structure and axially along the bearing.

The powerplant assembly may also include a second bearing mounting the shaft to the stationary structure. The heat exchange passage may spiral around the second bearing as the heat exchange passage extends within the stationary structure and axially along the second bearing.

The powerplant may be configured as or otherwise include a turbine engine. The assembly may also include a bladed rotor connected to and rotatable with the shaft.

The powerplant assembly may also include a fuel system including the fuel source and the heat exchange passage. The fuel system may be configured to direct fuel, received from the fuel source through the heat exchange passage, to the bearing to lubricate the bearing.

The stationary structure may be configured as or otherwise include an inlet structure for the powerplant. The inlet structure may include an inner platform structure, an outer platform structure and a plurality of inlet vanes. The inner platform structure may include the heat exchange passage. The inner platform structure may form a radial inner peripheral boundary of a flowpath through the inlet structure. The outer platform structure may form a radial outer peripheral boundary of the flowpath. The inlet vanes may be arranged circumferentially around the axis. Each of the inlet vanes may project across the flowpath from the inner platform structure to the outer platform structure.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic side sectional illustration of a powerplant.
FIG. 2 is a partial schematic side sectional illustration of the powerplant along an electric machine.
FIG. 3 is a partial schematic side sectional illustration of the powerplant along an inlet section.
FIG. 4 is a schematic illustration of a fluid system for the powerplant.
FIG. 5 is a partial schematic illustration of a fluid circuit of the fluid system.

### DETAILED DESCRIPTION

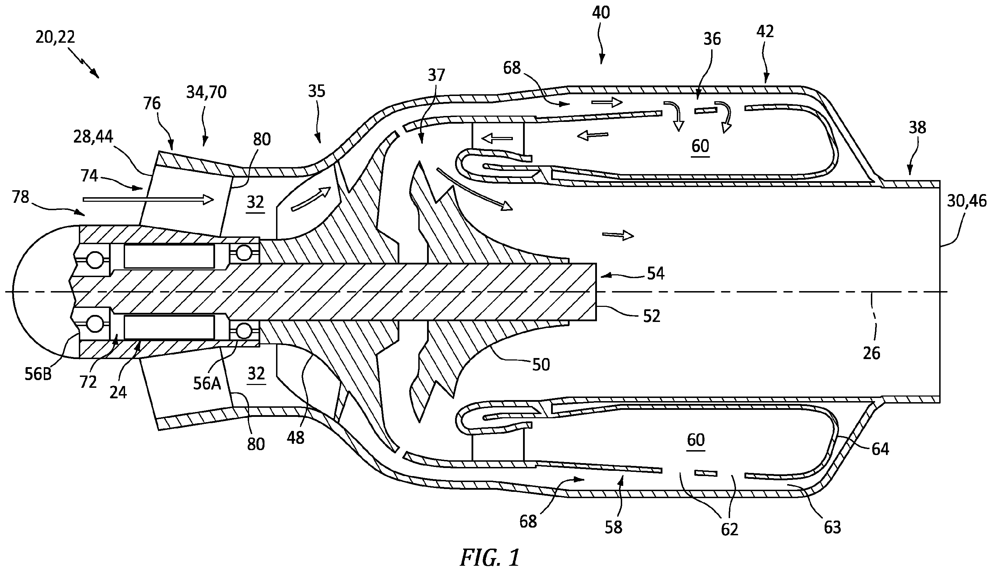

FIG. 1 illustrates a powerplant 20 for an aircraft. The aircraft may be an airplane, a drone (e.g., an unmanned aerial vehicle (UAV)) or any other manned or unmanned aerial vehicle or system. The aircraft powerplant 20 may be configured as, or otherwise included as part of, a propulsion system and/or a power generation system for the aircraft. The aircraft powerplant 20 of FIG. 1, for example, is configured as a single spool, radial-flow turbojet gas turbine engine 22 with an electric machine 24. The aircraft powerplant 20 of the present disclosure, however, is not limited to single spool turbine engines nor to turbojet turbine engines. Moreover, it is contemplated the powerplant 20 may be used for non-aircraft applications; e.g., a ground-based industrial power generation system.

The turbine engine 22 of FIG. 1 extends axially along an axis 26 from a forward, upstream airflow inlet 28 into the turbine engine 22 to an aft, downstream combustion products exhaust 30 from the turbine engine 22. The axis 26 may be a centerline axis of the turbine engine 22. The axis 26 may be a centerline axis of one or more components and/or structures of the turbine engine 22. The axis 26 may also or alternatively be a rotational axis for one or more rotating components within the turbine engine 22.

The turbine engine 22 includes a (e.g., annular) core flowpath 32, an inlet section 34, a compressor section 35, a (e.g., reverse flow) combustor section 36, a turbine section 37 and an exhaust section 38. At least (or only) the compressor section 35, the combustor section 36 and the turbine section 37 may form a core 40 of the turbine engine 22. The turbine engine 22 also includes a stationary engine structure 42. Briefly, this engine structure 42 may house and/or form the engine sections 35-37. The engine structure 42 may also form the engine sections 34 and 38.

The core flowpath 32 extends within the turbine engine 22 and its engine core 40 from an airflow inlet 44 into the core flowpath 32 to a combustion products exhaust 46 from the core flowpath 32. More particularly, the core flowpath 32 of FIG. 1 extends sequentially through the inlet section 34, the compressor section 35, the combustor section 36, the turbine section 37 and the exhaust section 38 between the core inlet 44 and the core exhaust 46. The core inlet 44 of FIG. 1 forms the engine inlet 28 into the turbine engine 22. The core exhaust 46 of FIG. 1 forms the engine exhaust 30 from the turbine engine 22. However, the core inlet 44 may alternatively be discrete and downstream from the engine inlet 28 and/or the core exhaust 46 may alternatively be discrete and upstream from the engine exhaust 30.

The compressor section 35 includes a bladed compressor rotor 48. The turbine section 37 includes a bladed turbine rotor 50. Each of these engine rotors 48, 50 includes a rotor base (e.g., a hub or a disk) and a plurality of rotor blades (e.g., vanes or airfoils) arranged circumferentially around and connected to the rotor base. The rotor blades, for example, may be formed integral with or mechanically fastened, welded, brazed and/or otherwise attached to the respective rotor base.

The compressor rotor 48 may be configured as a radial flow compressor rotor (e.g., an axial inflow-radial outflow compressor rotor), and the compressor section 35 may be configured as a radial flow compressor section. The turbine rotor 50 may be configured as a radial flow turbine rotor (e.g., a radial inflow-axial outflow turbine rotor), and the turbine section 37 may be configured as a radial flow turbine section. The compressor rotor 48 is connected to the turbine rotor 50 through an engine shaft 52. At least (or only) the compressor rotor 48, the turbine rotor 50 and the engine shaft 52 collectively form an engine rotating assembly 54; e.g., a spool of the turbine engine 22 and its engine core 40. This engine rotating assembly 54 and its engine shaft 52 are rotatably supported by the engine structure 42 through a plurality of engine bearings 56A and 56B (generally referred to as "56"); e.g., rolling element bearings, journal bearings, etc. The engine rotating assembly 54 and its members 48, 50 and 52 may thereby rotate about the axis 26.

The combustor section 36 includes an annular combustor 58 with an annular combustion chamber 60. The combustor 58 of FIG. 1 is configured as a reverse flow combustor. Inlet ports 62 and/or flow tubes into the combustion chamber 60, for example, may be arranged at (e.g., on, adjacent or proximate) and/or towards an aft bulkhead wall 64 of the combustor 58. An outlet from the combustor 58 may be arranged axially aft of an inlet to the turbine section 37. The combustor 58 may also be arranged radially outboard of and/or axially overlap (e.g., extend along) at least a (e.g., aft) portion of the turbine section 37. With this arrangement, the core flowpath 32 of FIG. 1 reverses direction (e.g., from a forward-to-aft direction to an aft-to-forward direction) a first time as the core flowpath 32 extends from an annular diffuser plenum 68 surrounding the combustor 58 into the combustion chamber 60. The core flowpath 32 of FIG. 1 then reverses direction (e.g., from the aft-to-forward direction to the forward-to-aft direction) a second time as the core flowpath 32 extends from the combustion chamber 60 into the turbine section 37.

During turbine engine operation, air enters the turbine engine 22 through the inlet section 34 and its core inlet 44. The inlet section 34 directs the air from the core inlet 44 into the core flowpath 32 and the compressor section 35. The air entering the core flowpath 32 may be referred to as "core air". This core air is compressed by the compressor rotor 48. The compressed core air is directed through a diffuser and its diffuser plenum 68 into the combustion chamber 60. Fuel is injected and mixed with the compressed core air to provide a fuel-air mixture. This fuel-air mixture is ignited within the combustion chamber 60, and combustion products thereof flow through the turbine section 37 and drive rotation of the turbine rotor 50 about the axis 26. The rotation of the turbine rotor 50 drives rotation of the compressor rotor 48 about the axis 26 and, thus, compression of the air received from the core inlet 44. The exhaust section 38 directs the combustion products out of the turbine engine 22 into an environment external to the aircraft to provide forward engine thrust.

The electric machine 24 may be integrated with the turbine engine 22. The electric machine 24 of FIG. 1, for example, is housed within a stationary inlet structure 70 of the turbine engine 22 and its engine structure 42. The electric machine 24 of FIG. 1, in particular, is disposed within an internal cavity 72 (e.g., an inner bore) of the inlet structure 70 and is located axially between the engine bearings 56.

The inlet structure 70 of FIG. 1 forms the inlet section 34 of the turbine engine 22. The inlet structure 70 of FIG. 1 also structurally supports the engine rotating assembly 54 within the engine structure 42 through the engine bearings 56. The inlet structure 70 of FIG. 1, for example, includes an inlet vane array 74, a radial outer platform structure 76 and a radial inner platform structure 78.

The inlet vane array 74 may be arranged at (or near) the core inlet 44. The inlet vane array 74 includes a plurality of inlet vanes 80; e.g., inlet guide vanes, struts, etc. The inlet vanes 80 are arranged and may be equispaced circumferentially about the axis 26 in an annular array; e.g., a circular array. Each of the inlet vanes 80 extends radially across the core flowpath 32 (in a radial outward direction away from the axis 26) from the inner platform structure 78 to the outer platform structure 76. The inlet vanes 80 may thereby structurally tie the inner platform structure 78 to the outer platform structure 76. The inlet vanes 80 may also be configured to condition (e.g., impart swirl to, etc.) the core air entering the compressor section 35.

The outer platform structure 76 extends longitudinally (e.g., generally axially in FIG. 1) along the core flowpath 32. The outer platform structure 76 extends circumferentially about (e.g., completely around) the axis 26 providing the outer platform structure 76 with, for example, a full-hoop (e.g., tubular) geometry. The outer platform structure 76 thereby forms a radial outer peripheral boundary of the core flowpath 32 through the inlet section 34 to the core inlet 44. This outer platform structure 76 also axially overlaps and circumscribes the inner platform structure 78 and the inlet vane array 74.

The inner platform structure 78 extends longitudinally (e.g., generally axially in FIG. 1) along the core flowpath 32. The inner platform structure 78 extends circumferentially about (e.g., completely around) the axis 26 providing the inner platform structure 78 with, for example, a full-hoop (e.g., tubular) geometry. The inner platform structure 78 thereby forms a radial inner peripheral boundary of the core flowpath 32 through the inlet section 34 to the core inlet 44. The inner platform structure 78 also forms a stationary support structure for the engine bearings 56 and the electric machine 24. The inner platform structure 78, for example, extends axially along and circumferentially about (e.g., circumscribes) one or more of the engine bearings 56 and the electric machine 24. The engine bearings 56 and the electric machine 24 may thereby be (e.g., directly) mounted to and supported by the inner platform structure 78. Here, the inner platform structure 78 also forms a radial outer peripheral boundary of the internal cavity 72 within the inlet structure 70.

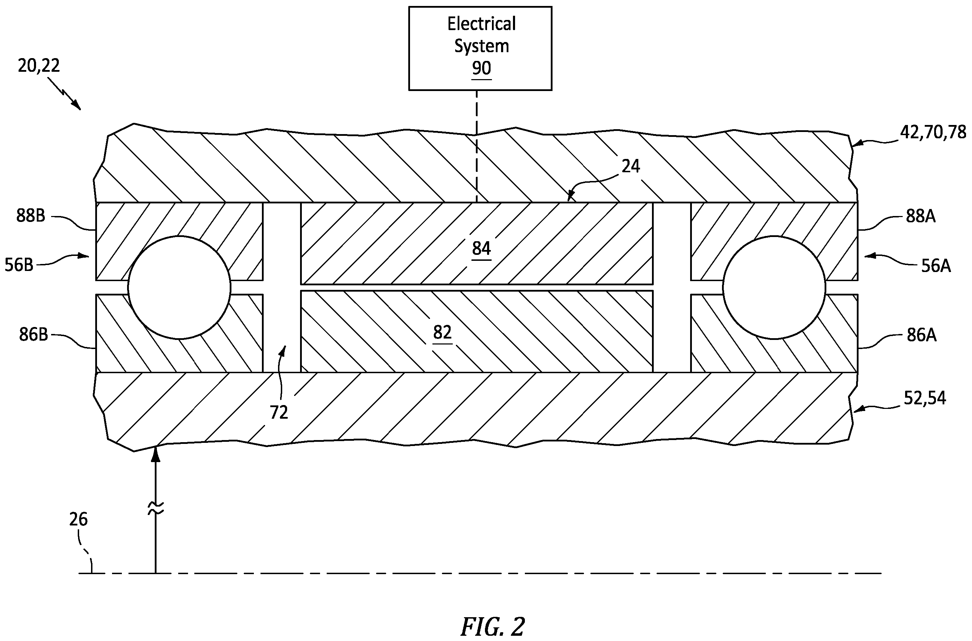

Referring to FIG. 2, the electric machine 24 may be configured as a permanent magnet generator (PMG). The electric machine 24 of FIG. 2, for example, includes an electric machine rotor 82 and an electric machine stator 84. Here, the inlet structure 70 and its inner platform structure 78 may provide a housing for the electric machine 24 and its members 82 and 84. The machine rotor 82 of FIG. 2 is fixedly attached to the engine rotating assembly 54 and its engine shaft 52, for example axially between inner races 86A and 86B (generally referred to as "86") of the engine bearings 56A and 56B. The machine rotor 82 is thereby configured to rotate about the axis 26 with the engine rotating assembly 54 and its engine shaft 52. The machine stator 84 of FIG. 2 is fixedly attached to the inner platform structure 78, for example axially between outer races 88A and 88B (generally referred to as "88") of the engine bearings 56A and 56B. The machine stator 84 is disposed radially outboard of and circumscribes the machine rotor 82. With this arrangement, the electric machine 24 is configured as a radial flux electric machine; e.g., a radial flux permanent magnet generator. The electric machine 24 of the present disclosure, however, is not limited to such an exemplary rotor-stator configuration nor to radial flux arrangements.

During turbine engine operation, the rotation of the engine rotating assembly 54 drives rotation of the machine rotor 82 about the axis 26. The rotation of the machine rotor 82 may generate an electromagnetic field with the machine stator 84, and the machine stator 84 may convert energy from the electromagnetic field into electricity. The electric machine 24 may then provide this electricity to an electrical system 90 (schematically shown) of the aircraft for storage, further use and/or distribution to one or more other aircraft and/or powerplant components. Here, the electric machine 24 is configured as a dedicated electric generator. However, it is contemplated the electric machine 24 may alternatively be configured as a motor-generator, or a dedicated electric motor in other embodiments.

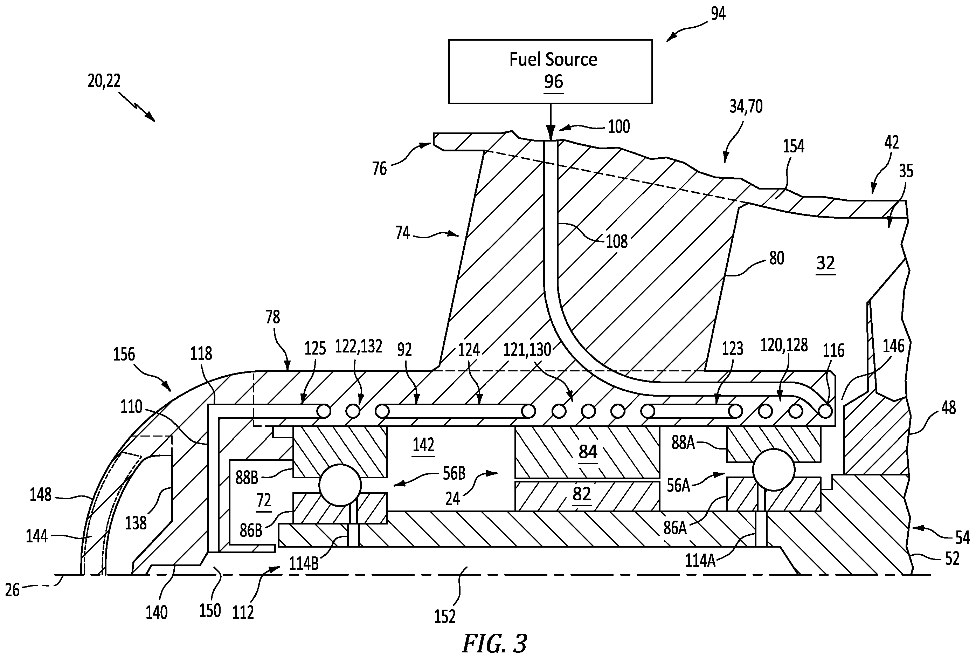

Referring to FIG. 3, the electric machine 24 and/or the engine bearings 56 may generate relatively high quantities of heat energy during turbine engine operation / electric machine operation. To dissipate at least some of this heat energy, the inlet structure 70 and its inner platform structure 78 are configured as or otherwise include a heat exchanger in (e.g., direct) thermal communication with (a) the electric machine 24 and its machine stator 84, (b) the first engine bearing 56A and its first outer race 88A, and/or (c) the second engine bearing 56B and its outer race 88B. The inner platform structure 78 of FIG. 3, in particular, includes an internal heat exchange (HX) passage 92 proximate the heat generating members 24, 56A, 56B of the powerplant 20 / the turbine engine 22. This HX passage 92 may be part of a fluid system such as a fuel system 94 for the powerplant 20 / the turbine engine 22. As described below in further detail, the fuel system 94 may also operate as a lubrication system for the engine bearings 56. However, it is contemplated, the fluid system including the HX passage 92 may alternatively be configured as a pure fuel system (e.g., just delivering fuel to the combustor section 36 of FIG. 1), a pure lubrication system (e.g., providing a lubricant such as oil to the engine bearings 56) and/or another cooling system for the powerplant 20 / the turbine engine 22 in other embodiments.

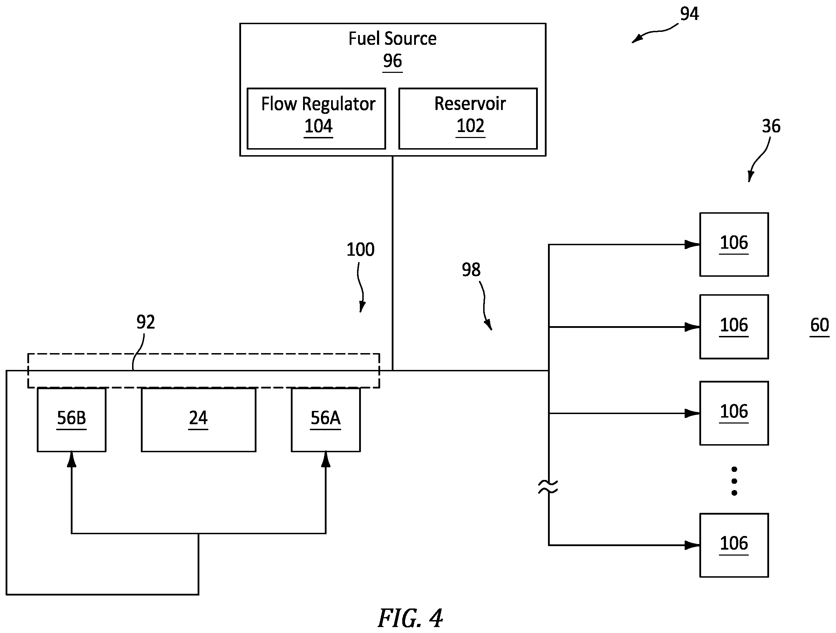

Referring to FIG. 4, the fuel system 94 includes a fuel source 96 and one or more fuel circuits 98 and 100. The fuel source 96 of FIG. 4 includes a fuel reservoir 102 and a fuel flow regulator 104. The reservoir 102 is configured to store a quantity of fuel before, during and/or after fuel system operation. The reservoir 102, for example, may be configured as or otherwise include a tank, a cylinder, a pressure vessel, a bladder or any other type of fuel storage container. The flow regulator 104 is configured to direct a flow of the fuel from the reservoir 102 into the fuel circuits 98 and 100. The flow regulator 104, for example, may be configured as or otherwise include a pump.

The injector fuel circuit 98 is configured to deliver the fuel, received from the fuel source 96, to one or more fuel injectors 106 in the combustor section 36. Each of these fuel injectors 106 is arranged with the combustor and configured to direct the fuel into the combustion chamber 60 for mixing with the compressed core air and subsequent combustion.

The heat exchange (HX) fuel circuit 100 is configured to deliver the fuel, received from the fuel source 96, to the HX passage 92 for cooling the powerplant heat generating members 24, 56A, 56B. The HX fuel circuit 100 may then deliver this fuel to the engine bearings 56 for lubrication of the engine bearings 56. The HX fuel circuit 100 of FIG. 3, for example, includes a fuel supply passage 108, the HX passage 92, a fuel transfer passage 110, a fuel manifold 112 and one or more fuel delivery passages 114A and 114B (generally referred to as "114") arranged sequentially between the fuel source 96 and the engine bearings 56.

The supply passage 108 may project radially inward within the inlet structure 70 to the HX passage 92. The supply passage 108 of FIG. 3, for example, extends from the outer platform structure 76, through a respective one of the inlet vanes 80, into the inner platform structure 78 to an upstream end 116 of the HX passage 92.

The HX passage 92 extends longitudinally within the inlet structure 70 and its inner platform structure 78 from the passage upstream end 116 to a downstream end 118 of the HX passage 92. In the arrangement of FIG. 3, the passage upstream end 116 is axially aft of the passage downstream end 118 along the axis 26; however, the present disclosure is not limited to such an exemplary orientation. The HX passage 92 of FIG. 3 is divided into a plurality of longitudinally extending (e.g., end-to-end) sections such as one or more heat exchange (HX) sections 120-122 and one or more bridge sections 123-125.

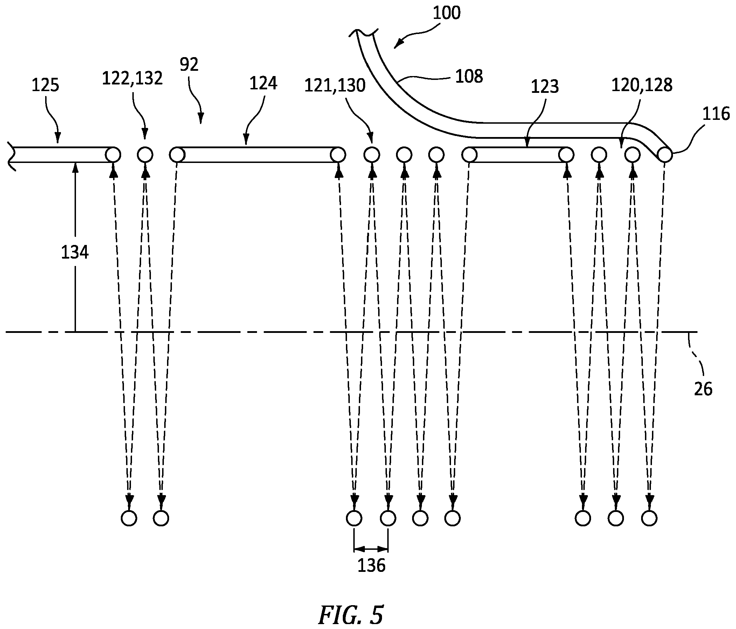

The first bearing HX section 120 is axially aligned with the first engine bearing 56A and its first outer race 88A. For example, along the first bearing HX section 120 of FIG. 3, the HX passage 92 (e.g., helically) spirals around the first engine bearing 56A and the axis 26 (see also FIG. 5) as the HX passage 92 extends within the inner platform structure 78 and axially along the first engine bearing 56A and its first outer race 88A. The HX passage 92 and its first bearing HX section 120 may thereby helically wrap at least one, two or more complete revolutions about the first engine bearing 56A and the axis 26 to provide a first bearing heat exchange (HX) coil 128 for the first engine bearing 56A. This first bearing HX coil 128 and, more particularly, the first bearing HX section 120 has an axial length along the axis 26 which may be sized equal to, or within plus/minus five or ten percent (+/- 5% or 10%) of an axial width of the first engine bearing 56A and/or its first outer race 88A. The first bearing HX coil 128 / the first bearing HX section 120 may thereby substantially or completely axially overlap and circumscribe the first engine bearing 56A and its first outer race 88A. In FIG. 3, the first bearing HX section 120 is disposed at the passage upstream end 116.

The first bridge section 123 fluidly couples the first bearing HX section 120 to the electric machine HX section 121. For example, along the first bridge section 123 of FIG. 3, the HX passage 92 extends longitudinally along a first bridge section trajectory within the inner platform structure 78 from a downstream end of the first bearing HX section 120 to an upstream end of the machine HX section 121. The first bridge section trajectory may be a straight line trajectory such that the first bridge section 123 extends substantially (or only) axially between the first bearing HX section 120 and the machine HX section 121. With such an arrangement, the first bridge section 123 is radially disposed to a (e.g., single) side of the axis 26. More particularly, unlike the HX sections 120-122, the first bridge section 123 may not wrap completely around the axis 26. The present disclosure, however, is not limited to such an exemplary first bridge section arrangement.

The machine HX section 121 is axially aligned with the electric machine 24 and its machine stator 84. For example, along the machine HX section 121 of FIG. 3, the HX passage 92 (e.g., helically) spirals around the electric machine 24 and the axis 26 (see also FIG. 5) as the HX passage 92 extends within the inner platform structure 78 and axially along the electric machine 24 and its machine stator 84. The HX passage 92 and its machine HX section 121 may thereby helically wrap at least one, two or more complete revolutions about the electric machine 24 and the axis 26 to provide an electric machine heat exchange (HX) coil 130 for the electric machine 24. This machine HX coil 130 and, more particularly, the machine HX section 121 has an axial length along the axis 26 which may be sized equal to, or within plus/minus five or ten percent (+/- 5% or 10%) of an axial width of the electric machine 24 and/or its machine stator 84. The machine HX coil 130 / the machine HX section 121 may thereby substantially or completely axially overlap and circumscribe the electric machine 24 and its machine stator 84. In FIG. 3, the machine HX section 121 is fluidly coupled between the first bearing HX section 120 and the second bearing HX section 122.

The second bridge section 124 fluidly couples the machine HX section 121 to the second bearing HX section 122. For example, along the second bridge section 124 of FIG. 3, the HX passage 92 extends longitudinally along a second bridge section trajectory within the inner platform structure 78 from a downstream end of the machine HX section 121 to an upstream end of the second bearing HX section 122. The second bridge section trajectory may be a straight line trajectory such that the second bridge section 124 extends substantially (or only) axially between the machine HX section 121 and the second bearing HX section 122. With such an arrangement, the second bridge section 124 is radially disposed to the side of the axis 26. More particularly, unlike the HX sections 120-122, the second bridge section 124 may not wrap completely around the axis 26. The present disclosure, however, is not limited to such an exemplary second bridge section arrangement.

The second bearing HX section 122 is axially aligned with the second engine bearing 56B and its second outer race 88B. For example, along the second bearing HX section 122 of FIG. 3, the HX passage 92 (e.g., helically) spirals around the second engine bearing 56B and the axis 26 (see also FIG. 5) as the HX passage 92 extends within the inner platform structure 78 and axially along the second engine bearing 56B and its second outer race 88B. The HX passage 92 and its second bearing HX section 122 may thereby helically wrap at least one, two or more complete revolutions about the second engine bearing 56B and the axis 26 to provide a second bearing heat exchange (HX) coil 132 for the second engine bearing 56B. This second bearing HX coil 132 and, more particularly, the second bearing HX section 122 has an axial length along the axis 26 which may be sized equal to, or within plus/minus five or ten percent (+/- 5% or 10%) of an axial width of the second engine bearing 56B and/or its second outer race 88B. The second bearing HX coil 132 / the second bearing HX section 122 may thereby substantially or completely axially overlap and circumscribe the second engine bearing 56B and its second outer race 88B.

The third bridge section 125 fluidly couples the second bearing HX section 122 to the fuel transfer passage 110. For example, along the third bridge section 125 of FIG. 3, the HX passage 92 extends longitudinally along a third bridge section trajectory within the inner platform structure 78 from a downstream end of the second bearing HX section 122 to an upstream end of the fuel transfer passage 110. The third bridge section trajectory may be a straight line trajectory such that the third bridge section 125 projects substantially (or only) axially out from the second bearing HX section 122. With such an arrangement, the third bridge section 125 is radially disposed to the side of the axis 26. More particularly, unlike the HX sections 120-122, the third bridge section 125 may not wrap completely around the axis 26. The present disclosure, however, is not limited to such an exemplary third bridge section arrangement.

Referring to FIG. 5, the HX passage 92 and its longitudinally extending sections 120-125 may lie in a common (the same) cylindrical reference plane. A radius 134 from the axis 26 to the HX passage 92 of FIG. 5, for example, may remain uniform as the HX passage 92 extends axially along and/or circumferential around the axis 26 from the passage upstream end 116 to the passage downstream end 118 (see FIG. 3). The present disclosure, however, is not limited to such an exemplary arrangement. For example, in other embodiments, one, some or all of the HX sections 120-125 may lie in its own discrete tubular (e.g., cylindrical) reference plane to provide the HX passage 92 with, for example, an axially stepped and/or otherwise configuration.

Along at least an axial portion or an entirety of each HX section 120-122, the HX passage 92 may have a uniform pitch 136 as the HX passage 92 spirals around the axis 26. Here, the term "pitch" may describe a distance between two axially neighboring (but, axially spaced apart) portions of the HX passage 92; e.g., two axially neighboring circumferential wraps of the HX passage 92 about the axis 26 along the respective HX section 120-122. The present disclosure, however, is not limited to such an exemplary uniform pitch arrangement. For example, different HX sections 120-122 may have different pitches 136. In addition or alternatively, the pitch 136 within a respective HX section 120-122 may change along the axis 26; e.g., the wraps may be spaced closer together or farther apart along the axis 26.

Referring to FIG. 3, the fuel transfer passage 110 fluidly couples the HX passage 92 to the fuel manifold 112. The fuel transfer passage 110 of FIG. 3, for example, projects radially inward from the passage downstream end 118 and out of the inner platform structure 78, through a strut 138 (e.g., a vane, a mount, a pillar, etc.), and into a center body 140 to the fuel manifold 112. Here, the strut 138 extends radially across a cooling flowpath 142 from the inner platform structure 78 to the center body 140. The cooling flowpath 142 extends within the inlet structure 70 between an inlet 144 (schematically shown in FIG. 3) into the cooling flowpath 142 and an outlet 146 from the cooling flowpath 142. More particularly, the cooling flowpath 142 extends from the cooling flowpath inlet 144, through an annular volume formed within the internal cavity 72 between (a) the engine rotating assembly 54 and its engine shaft 52 and (b) the inner platform structure 78, to the cooling flowpath outlet 146. The cooling flowpath inlet 144 may be formed by perforations in a nose cap 148 of the inlet structure 70; e.g., a mesh screen nose cap. The cooling flowpath inlet 144 may thereby direct cooling air from outside of the turbine engine 22 into the cooling flowpath 142; e.g., the same ambient air as directed into the core flowpath 32 through the core inlet 44. The cooling flowpath outlet 146 fluidly couples the cooling flowpath 142 to a section of the core flowpath 32; e.g., downstream of the inlet vane array 74 and upstream of the compressor rotor 48.

The fuel manifold 112 fluidly couples the fuel transfer passage 110 to the fuel delivery passages 114, for example in parallel. The fuel manifold 112 of FIG. 3 is formed by and within the center body 140 and the engine rotating assembly 54. Thus, as fuel flows within the fuel manifold 112 from a bore 150 in the center body 140 to a bore 152 in the engine rotating assembly 54, the fuel moves from the stationary inlet structure 70 into the rotating engine rotating assembly 54.

The fuel delivery passages 114 are aligned with the engine bearings 56. The fuel delivery passages 114 are configured to deliver fuel received from the fuel manifold 112 to the engine bearings 56 for lubricating those engine bearings 56.

During turbine engine operation, fuel received from the fuel source 96 is directed through the HX fuel circuit 100 to the engine bearings 56. As the fuel flows through each HX section 120-122 of the HX passage 92, material forming the inner platform structure 78 conducts the heat energy generated by the respective powerplant heat generating member 56A, 24, 56B into the fuel flowing through that respective HX section 120-122 of the HX passage 92. The fuel is thereby operable to cool the respective powerplant heat generating member 56A, 24, 56B as well as carry away the rejected heat energy. Some of this heat energy may then be transferred into cooling air flowing through the cooling flowpath 142 as the cooling air flows around the strut 138. The rest of the heat energy may be carried with the fuel to preheat the fuel. Following lubrication of the engine bearings 56, the preheated fuel may flow with the cooling air into the core flowpath 32.

In some embodiments, at least a portion of the inlet structure 70 axially overlapping and circumscribing the powerplant heat generating members 24, 56A, 56B may be formed as a (e.g., metal) monolithic body 154. Herein, the term "monolithic" may describe an apparatus which is formed as a single, unitary body. At least (or only) the inlet structure members 74, 76 and 78, for example, may be additively manufactured, cast, machined and/or otherwise formed as an integral, unitary body. This monolithic body 154 may or may not include a cap assembly 156 of the inlet structure 70.

The turbine engine 22 is described above as a single spool, radial-flow turbojet gas turbine engine for ease of description. The present disclosure, however, is not limited to such an exemplary turbine engine. The turbine engine 22, for example, may alternatively be configured as an axial flow gas turbine engine. The turbine engine 22 may be configured as a direct drive gas turbine engine. The turbine engine 22 may alternatively include a geartrain that connects one or more rotors together such that the rotors rotate at different speeds. The turbine engine 22 may be configured with a single spool (e.g., see FIG. 1), two spools, or with more than two spools. The turbine engine 22 may be configured as a turbofan engine, a turboshaft engine, a turboprop engine, a propfan engine, a pusher fan engine or any other type of turbine engine. In addition, while the turbine engine 22 is described above with an exemplary reverse flow annular combustor, the turbine engine 22 may also or alternatively include any other type / configuration of annular, tubular (e.g., CAN), axial flow and/or reverse flow combustor. The present disclosure therefore is not limited to any particular types or configurations of turbine engines.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for a powerplant (20), comprising:
an electric machine (24) comprising an electric machine rotor (82), the electric machine rotor (82) configured to rotate about an axis (26);
a stationary structure (70) supporting the electric machine (24) and comprising a heat exchange passage (92), the heat exchange passage (92) spiraling around the electric machine (24) as the heat exchange passage (92) extends within the stationary structure (70) and axially along the electric machine (24); and
a fuel source (96) fluidly coupled to the heat exchange passage (92).

2. The assembly of claim 1, wherein the stationary structure (70) is configured to transfer heat energy from the electric machine (82) into fuel flowing within the heat exchange passage (92) that is received from the fuel source (96).

3. The assembly of claim 1 or 2, wherein:
the electric machine (82) further comprises an electric machine stator (84) mounted to the stationary structure (70); and
the electric machine stator (84) is radially next to the electric machine rotor (82), and the electric machine stator (84) axially overlaps and circumscribes the electric machine rotor (82).

4. The assembly of any preceding claim, wherein the heat exchange passage (92) has a uniform radius (134) from the axis (26) as the heat exchange passage (92) spirals around the electric machine (82).

5. The assembly of any preceding claim, wherein the heat exchange passage (92) has a uniform pitch (136) as the heat exchange passage (92) spirals around the electric machine (82).

6. The assembly of any preceding claim, wherein:
the heat exchange passage includes a first section (121) and a second section (123; 124) fluidly coupled to the first section (121);
the first section (121) spirals around the electric machine (82); and
the second section (123; 124) extends along a straight line trajectory.

7. The assembly of claim 6, wherein:
the heat exchange passage (92) further includes a third section (120; 122) fluidly coupled to the first section (121) through the second section (123; 124); and
the third section (120; 122) spirals around the axis (26) as the heat exchange passage (92) extends within the stationary structure (70) and axially along the axis (26).

8. The assembly of any of claims 1 to 5, wherein:
the heat exchange passage (92) includes a first section (121), a second section (123; 124) and a third section (120; 122) fluidly coupled to the first section (121) through the second section (123; 124);
the first section (121) spirals around the electric machine (82);
the second section (123; 124) is disposed to a side of the axis (26); and
the third section (120; 122) spirals around the axis (26) as the heat exchange passage (92) extends within the stationary structure (70) and axially along the axis (26).

9. The assembly of claim 8, wherein the second section (123; 124) extends along a straight trajectory from the first section (121) to the third section (120; 122).

10. The assembly of any preceding claim, further comprising:
a shaft (52) configured to rotate about the axis (26); and
a bearing (56A) mounting the shaft (52) to the stationary structure (42);
the electric machine rotor (82) attached to and rotatable with the shaft (52); and
the heat exchange passage (92) spiraling around the bearing (56A) as the heat exchange passage (92) extends within the stationary structure (70) and axially along the bearing (56A).

11. The assembly of claim 10, further comprising:
a second bearing (56B) mounting the shaft (52) to the stationary structure (70);
the heat exchange passage (92) spiraling around the second bearing (56B) as the heat exchange passage (92) extends within the stationary structure (70) and axially along the second bearing (56B).

12. The assembly of claim 10 or 11, wherein the powerplant (20) comprises a turbine engine (22), and the assembly further comprises a bladed rotor (48) connected to and rotatable with the shaft (52).

13. The assembly of any of claims 10 to 12, further comprising:
a fuel system (94) including the fuel source (96) and the heat exchange passage (92);
the fuel system (94) configured to direct fuel, received from the fuel source (96) through the heat exchange passage (92), to the bearing (56A) to lubricate the bearing (56A).

14. The assembly of any preceding claim, wherein:
the stationary structure (70) comprises an inlet structure (70) for the powerplant (20);
the inlet structure (70) includes an inner platform structure (78), an outer platform structure (76) and a plurality of inlet vanes (80);
the inner platform structure (78) includes the heat exchange passage (92), and the inner platform structure (78) forms a radial inner peripheral boundary of a flowpath (32) through the inlet structure (70);
the outer platform structure (76) forms a radial outer peripheral boundary of the flowpath (32); and
the plurality of inlet vanes (80) are arranged circumferentially around the axis (26), and each of the plurality of inlet vanes (80) projects across the flowpath (32) from the inner platform structure (78) to the outer platform structure (76).
